# EUROPEAN PATENT APPLICATION

(11) **EP 4 223 460 A1**
(43) Date of publication of application: **09.08.2023**
(21) Application number: 21874897.8
(22) Date of filing: 03.08.2021
(51) Int. Cl.: B25J 5/00

(54) **MOBILE ROBOT, MOBILE ROBOT SYSTEM, AND RECHARGEABLE BATTERY REPLACEMENT METHOD FOR MOBILE ROBOT**

(30) Priority: 01.10.2020 JP 2020166734
(71) Applicant: Hitachi, Ltd., Tokyo 100-8280 (JP)
(72) Inventor: ODAI, Masaki, Tokyo 100-8280 (JP); SHIBATA, Toru, Tokyo 100-8280 (JP); FUNATSU, Terunobu, Tokyo 100-8280 (JP); OCHI, Manabu, Tokyo 100-8280 (JP)
(74) Representative: Mewburn Ellis LLP
(86) International application number: PCT/JP2021/028698
(87) International publication number: WO 2022/070594

(57) **Abstract**

This mobile robot is provided with a robot power control unit, a mobile unit, an operation unit, and a control unit, wherein: the mobile unit has a function of moving the mobile robot; the operation unit has a function of performing a prescribed operation; the control unit performs calculation for controlling the operation of at least the mobile unit and the operation unit and outputs control commands respectively to the mobile unit and the operation unit; the robot power control unit has a housing for a detachable rechargeable battery; the detachable rechargeable battery housed in the housing supplies power to the mobile unit and the operation unit; and the prescribed operation includes battery replacement operation in which the detachable rechargeable battery housed in the housing is removed from the housing and from the outside, another detachable rechargeable battery is placed in the housing. As a result of said feature, the mobile robot system can have a station with a simple structure and reduced size while the rest time for the mobile robot can be reduced so as to ensure adequate time for the actual operation of the mobile robot.

## Description

### Technical Field

The present invention relates to a mobile robot, a mobile robot system, and a method for replacing a rechargeable battery of the mobile robot.

### Background Art

Work robots that move over a wide range in work spaces to work are known. Conventionally, power for driving such a work robot is supplied by charging a battery mounted in the work robot at a station fixedly installed separately from the work robot. In this case, there is room for improvement in that the work robot needs to be paused for a long time.

PTL 1 discloses that by using a station for a self-traveling robot including a traveling unit for movement, the station including a battery replacement means that replaces a detachable battery unit that supplies power to each unit of the self-traveling robot itself with a charged battery unit prepared in advance, the self-traveling robot can be avoided from being in a pause state over a charging period, and the operation rate of the self-traveling robot is improved.

### Citation List

### Patent Literature

PTL 1: JP 2005-270430 A

### Summary of Invention

### Technical Problem

Since the station described in PTL 1 includes the battery replacement means, the station has a large size, a large weight, and a complicated structure. This increases the necessity of maintenance. Furthermore, it is considered that there also arises a problem that an installation place of the station is limited and the station narrows the space that humans can use.

An object of the present invention is, in a mobile robot system, to simplify the structure of a station, reduce the size of the station, shorten a pause time of a mobile robot, and secure a time during which the mobile robot actually works.

### Solution to Problem

The present invention is a mobile robot including: a robot power control unit; a moving unit; a work unit; and a control unit, wherein the moving unit has a function of moving the mobile robot, the work unit has a function of performing predetermined work, the control unit performs calculations for controlling at least operations of the moving unit and the work unit, and outputs a control command to each of the moving unit and the work unit, the robot power control unit includes a housing portion for a detachable rechargeable battery, the detachable rechargeable battery housed in the housing portion supplies power to the moving unit and the work unit, and the predetermined work includes battery replacement work in which the detachable rechargeable battery housed in the housing portion is detached from the housing portion and another detachable rechargeable battery is attached from an outside to the housing portion.

### Advantageous Effects of Invention

According to the present invention, in the mobile robot system, it is possible to simplify the structure of the station, reduce the size of the station, shorten a pause time of the mobile robot, and secure a time during which the mobile robot actually works.

### Brief Description of Drawings

[FIG. 1A] FIG. 1A is a schematic configuration diagram illustrating an example of a mobile robot that is a component of a mobile robot system according to a first embodiment.
[FIG. 1B] FIG. 1B is a schematic configuration diagram illustrating an example of a station that is a component of the mobile robot system according to the first embodiment.
[FIG. 2] FIG. 2 is a flowchart illustrating an example of a method for replacing a rechargeable battery of the mobile robot system.
[FIG. 3A] FIG. 3A is a schematic side view illustrating an example of a positional relationship of the mobile robot system at the time of battery replacement work.
[FIG. 3B] FIG. 3B is a top view of FIG. 3A.
[FIG. 4A] FIG. 4A is a flowchart illustrating an example of battery replacement step S205 in FIG. 2.
[FIG. 4B] FIG. 4B is a flowchart illustrating another example of battery replacement step S205 in FIG. 2.
[FIG. 4C] FIG. 4C is a flowchart illustrating still another example of battery replacement step S205 in FIG. 2.
[FIG. 4D] FIG. 4D is a flowchart illustrating still another example of battery replacement step S205 in FIG. 2.
[FIG. 5] FIG. 5 is a schematic configuration diagram illustrating an example of a mobile robot system including a plurality of components.
[FIG. 6] FIG. 6 is a schematic configuration diagram illustrating a mobile robot according to a second embodiment.
[FIG. 7] FIG. 7 is a top view illustrating an example of an accommodating portion that is a portion for accommodating a detachable rechargeable battery.

### Description of Embodiments

The present invention relates to a mobile work robot that mainly moves and works, and a system that supplies power for driving the robot.

Hereinafter, embodiments will be described with reference to the drawings.

### [First embodiment]

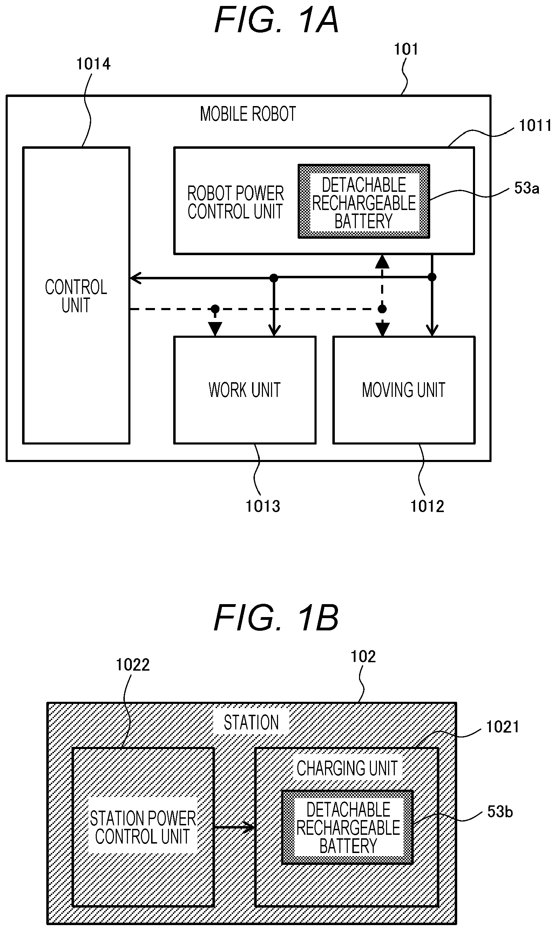

FIG. 1A is a schematic configuration diagram illustrating an example of a mobile robot that is a component of a mobile robot system.

FIG. 1B is a schematic configuration diagram illustrating an example of a station that is a component of the mobile robot system.

In FIG. 1A, a mobile robot 101 includes a robot power control unit 1011, a moving unit 1012, a work unit 1013, and a control unit 1014.

The robot power control unit 1011 supplies power to the components of the mobile robot 101.

The robot power control unit 1011 includes a housing portion for at least one detachable rechargeable battery 53a that is detachable, and can receive power from the detachable rechargeable battery 53a. Furthermore, the robot power control unit 1011 may be capable of receiving power from the outside of the mobile robot 101.

The control unit 1014 performs calculations for controlling at least the operations of the moving unit 1012 and the work unit 1013, and outputs a control command to each of the moving unit 1012 and the work unit 1013. The control unit 1014 may perform a calculation for controlling the operation of the robot power control unit 1011, and may output a control command. Furthermore, the power of the control unit 1014 is mainly supplied from the robot power control unit 1011.

The moving unit 1012 operates by using the power supplied from the robot power control unit 1011 on the basis of the control command input from the control unit 1014. The mobile robot 101 moves by the operation of the moving unit 1012. Here, a part or all of the control unit 1014 may be included in a control device (a control device installed outside the mobile robot 101) separate from the mobile robot 101. In this case, it is sufficient that the power of the control unit 1014 in the control device is supplied from an external energy supply system, and it is sufficient that output signals such as control commands and commands to the control unit 1014 in the mobile robot 101 are transmitted to the mobile robot 101 wired or wirelessly.

The work unit 1013 performs predetermined work by using the power supplied from the robot power control unit 1011 on the basis of the control command input from the control unit 1014. Here, the predetermined work includes battery replacement work (described later). Note that the work unit 1013 normally performs predetermined work by mechanical movement of a manipulator, a piston, or the like. However, manipulation by the work unit 1013 is not limited to the use of mechanical force involving contact, and may use electric force or magnetic force. Specifically, an electromagnet, a magnet, or static electricity may be used. For the battery replacement work, a manipulator, a piston, or the like can be used.

In FIG. 1B, a station 102 includes a charging unit 1021 and a station power control unit 1022.

The charging unit 1021 detachably accommodates at least one detachable rechargeable battery 53b (another detachable rechargeable battery). The charging unit 1021 can charge the detachable rechargeable battery 53b.

The station power control unit 1022 receives energy from an external energy supply system such as a power outlet, for example, and supplies power for charging to the charging unit 1021. Furthermore, the station power control unit 1022 may be capable of supplying power to the outside of the station 102.

Note that the above-described configuration of the mobile robot system is an example, and the configuration is not limited thereto. For example, the mobile robot 101 may include other components such as sensors for control.

Furthermore, the number of installed stations 102 may be only one, but in a case where the mobile robot 101 has a wide moving range, it is desirable to install a plurality of stations.

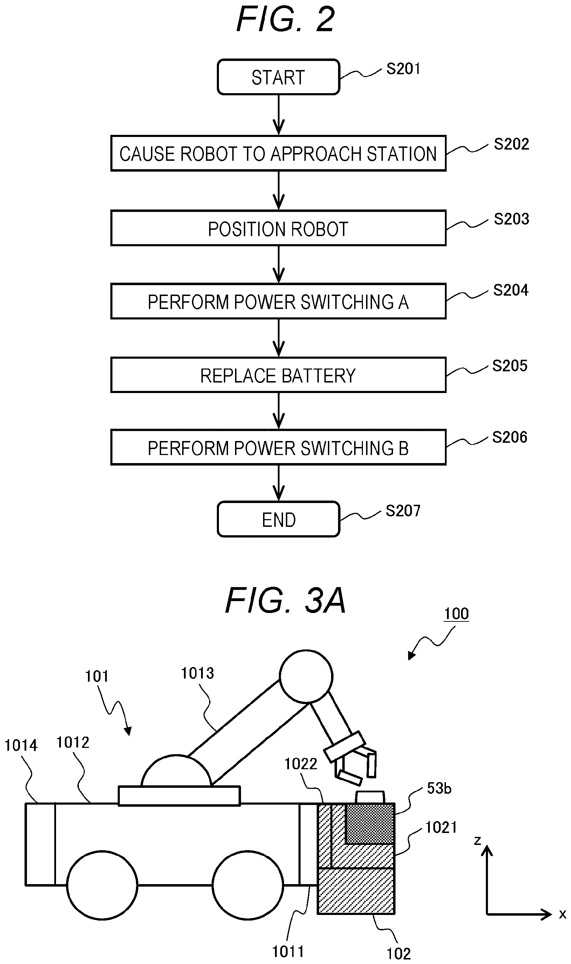

FIG. 2 is a flowchart illustrating an example of a method for replacing a rechargeable battery of the mobile robot system.

In the flowchart, for example, in a case where the control unit 1014 determines that energy replenishment is necessary, such as a case where the retained power amount (remaining power amount) of the detachable rechargeable battery 53a (used battery), which is a rechargeable battery mounted in the mobile robot 101 and has consumed power by robot work, has decreased to a predetermined value or less, the process transitions to approaching step S202 from start step S201 in order to replenish energy to the mobile robot 101.

In approaching step S202, the moving unit 1012 is driven on the basis of a control command output from the control unit 1014 for causing the mobile robot 101 to approach a predetermined station 102, and the mobile robot 101 moves and approaches the station 102.

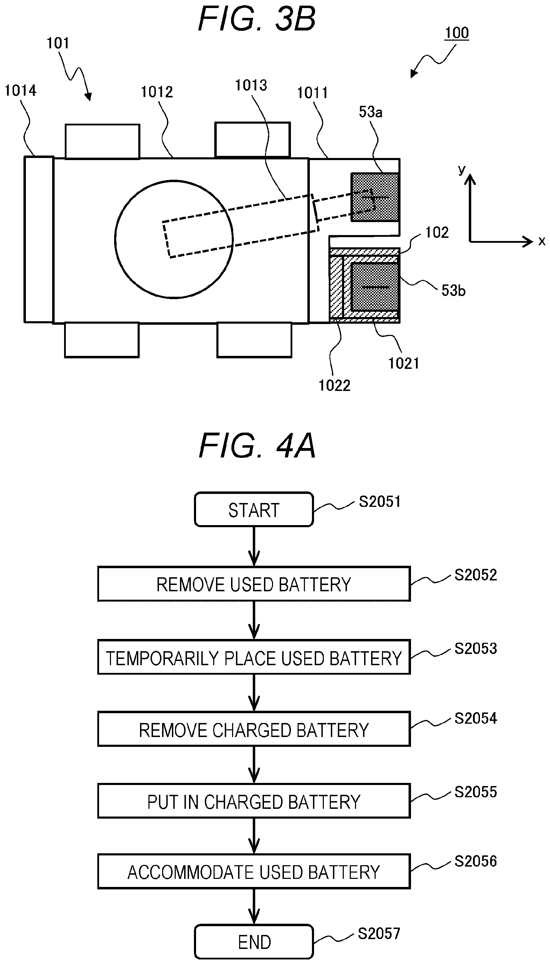

In robot positioning step S203, the moving unit 1012 is driven so that the mobile robot 101 and the station 102 take a predefined relative positional relationship, and the mobile robot 101 is positioned. Here, the predefined positional relationship may be any relationship as long as the mobile robot 101 can receive power from the station 102, and can perform battery replacement work (described later). This will be described in detail later with reference to FIGS. 3A and 3B.

In power switching A step S204, the power source of the mobile robot 101 is switched from the detachable rechargeable battery 53a mounted in the mobile robot 101 to the power supplied from the station 102 to the robot power control unit 1011. The station 102 supplies the power from the station power control unit 1022 to the robot power control unit 1011 by a contact type or non-contact type power supply method.

In battery replacement step S205, the work unit 1013 performs battery replacement work of replacing the detachable rechargeable battery 53a (used battery) with the detachable rechargeable battery 53b (charged battery) on the basis of a control command from the control unit 1014. Here, the battery replacement work will be described in detail later with reference to FIGS. 4A to 4D.

In power switching B step S206, the source of power of the mobile robot 101 is switched from the power supplied from the station 102 to the robot power control unit 1011 to the detachable rechargeable battery 53b newly mounted in the mobile robot 101. The station 102 stops power supply to the robot power control unit 1011.

In end step S207, an energy replenishment routine to the mobile robot 101 is ended. As a result, the mobile robot 101 returns to the originally intended work. On the other hand, the station 102 starts charging the newly accommodated detachable rechargeable battery 53a.

Next, the predefined positional relationship will be described with reference to FIGS. 3A and 3B.

FIG. 3A is a schematic side view illustrating an example of a positional relationship of the mobile robot system at the time of battery replacement work in the present embodiment.

FIG. 3B is a top view of FIG. 3A.

In these drawings, a mobile robot system 100 includes the mobile robot 101 and the station 102.

As illustrated in FIG. 3B, the robot power control unit 1011 has an L shape so as to mesh with the station 102.

The moving unit 1012 is a cart having four wheels and capable of freely traveling on a floor. The work unit 1013 is a manipulator including a robot arm and a robot hand.

The control unit 1014 is installed on a side opposite to the robot power control unit 1011.

Here, assuming that a side of the robot power control unit 1011 of the mobile robot 101 is the front side of the mobile robot 101, it can be said that the control unit 1014 is located on the rear side of the mobile robot 101. In this case, FIGS. 3A and 3B illustrate the front direction of the mobile robot 101 as an x-axis direction, the left direction of the mobile robot 101 as a y-axis direction, and the vertical direction as a z-axis direction.

In the predefined positional relationship at the time of battery replacement work, the robot power control unit 1011 is stopped at a position where power can be supplied from the station power control unit 1022. For example, electrodes of the robot power control unit 1011 and the station power control unit 1022 have a positional relationship in which the electrodes can physically contact each other. Another example in which power is supplied wirelessly, a power receiving unit of the robot power control unit 1011 and a power supply unit of the station power control unit 1022 have a positional relationship in which the power receiving unit and the power supply unit are electromagnetically connectable.

Furthermore, both the detachable rechargeable battery 53a mounted in the mobile robot 101 at the start of the battery replacement work and the detachable rechargeable battery 53b accommodated in the station 102 are disposed at positions accessible by the work unit 1013 (manipulator).

Two detachable rechargeable batteries 53a and 53b, and the housing portions thereof are disposed at positions substantially line-symmetric with respect to the x axis. This ensures accessibility by the work unit 1013.

The positional relationship between the two detachable rechargeable batteries 53a and 53b at the start of the battery replacement work may be any positional relationship as long as the work unit 1013 can attach and detach each of the detachable rechargeable batteries 53a and 53b.

For example, in FIG. 3B, a positional relationship substantially line-symmetric with respect to the y axis may be employed, or 180° symmetrical about the z-axis or the like may also be employed.

In this manner, the predefined positional relationship may be any relationship as long as power can be supplied from the station 102 to the mobile robot 101, and the work unit 1013 can perform battery replacement work, that is, attachment and detachment work of the detachable rechargeable batteries 53a and 53b. The specific positional relationship depends on the specific configuration of the mobile robot 101.

Here, a mechanical or electromagnetic lock mechanism may be provided between the mobile robot 101 and the station 102 in order to ensure the predefined positional relationship. In a case where the predefined relative positional relationship between the mobile robot 101 and the station 102 is formed in robot positioning step S203, locking is performed so as to hold the relative positional relationship. This locking can be realized by a mechanical lock mechanism in which latching is performed when the predefined positional relationship is formed, an electromagnetic lock function in which the positional relationship is fixed by magnetic force, or the like.

It is sufficient that the lock may be released by driving the mobile robot 101 on the basis of a command from the control unit 1014 after the battery replacement work is ended. Furthermore, for example, the latch may be driven to release the lock, or the supply of the power to the lock electromagnet may be stopped.

With such a configuration, it is possible to prevent the predefined positional relationship between the mobile robot 101 and the station 102 from being canceled due to the reaction force of the battery replacement work by the work unit 1013 or the like, and to prevent the power supply to the mobile robot 101 from being stopped.

Note that FIG. 3A illustrates a case where the detachable rechargeable batteries 53a and 53b are accessed from above, but the present invention is not limited to such an embodiment. It is sufficient that the detachable rechargeable batteries 53a and 53b can be attached and detached, and for example, the detachable rechargeable batteries 53a and 53b may be accessed from a lateral direction, an oblique direction, or the like.

Furthermore, in FIGS. 3A and 3B, the detachable rechargeable batteries 53a and 53b are exposed, but the present invention is not limited thereto. For example, the detachable rechargeable batteries 53a and 53b may be covered, or the like, with a cover. In this case, it is sufficient that the cover can be opened and closed by the work unit 1013, and it is sufficient that the predefined positional relationship is a positional relationship in which the work unit 1013 can access the cover and the exposed detachable rechargeable batteries 53a and 53b.

Furthermore, like a handle illustrated in FIG. 3A, the detachable rechargeable battery 53 may include a member that assists the battery attachment and detachment work by the work unit 1013.

Furthermore, FIGS. 3A and 3B illustrate the cart that travels on the floor as an example of the moving unit 1012, but the present invention is not limited thereto. For example, the moving unit 1012 may be a cart that travels on a ceiling or a wall, a device that flies in the air or runs in the water such as a drone, or the like.

Furthermore, FIGS. 3A and 3B illustrate the manipulator as an example of the work unit 1013, but the present invention is not limited thereto. For example, the work unit 1013 may be a device that performs transportation work such as a crane, a device that performs work such as suction or traction, or the like. Furthermore, the work unit 1013 may include a plurality of work units. For example, the work unit 1013 may include both a manipulator and a drilling work unit. In summary, it is sufficient that the work unit 1013 has a configuration in which at least one work unit element can implement the battery replacement work.

Furthermore, the example of the arrangement and configuration of the mobile robot 101 illustrated in FIG. 3 is not limited thereto. Any arrangement and configuration may be employed as long as work by the work unit 1013 (including the battery replacement work) and movement by the moving unit 1012 are possible.

FIG. 4A is a flowchart illustrating an example of battery replacement step S205.

In the flowchart, battery replacement step S205 starts from battery replacement start step S2051. In used battery removal step S2052, the work unit 1013 removes the mounted detachable rechargeable battery 53a from the robot power control unit 1011.

In used battery temporary placement step S2053, the work unit 1013 transports the removed detachable rechargeable battery 53a to a temporary placing position to place and temporarily hold the detachable rechargeable battery 53a.

In charged battery removal step S2054, the work unit 1013 removes the accommodated detachable rechargeable battery 53b from the station power control unit 1022.

In charged battery put-in step S2055, the work unit 1013 transports the removed detachable rechargeable battery 53b to a predetermined battery accommodating position of the robot power control unit 1011, and puts in the detachable rechargeable battery 53b in a posture capable of supplying power.

In used battery accommodating step S2056, the work unit 1013 transports the temporarily held detachable rechargeable battery 53a from the temporary placing position to the predetermined battery accommodating position of the station power control unit 1022, and accommodates the detachable rechargeable battery 53a in a chargeable posture.

In battery replacement end step S2057, battery replacement step S205 is ended.

Here, the temporary placing position may be any position. A specific temporary placing position or a facility may be prepared in the mobile robot 101, the station 102, or the surrounding environment. With respect to the temporary placing position, the same applies to the following another example.

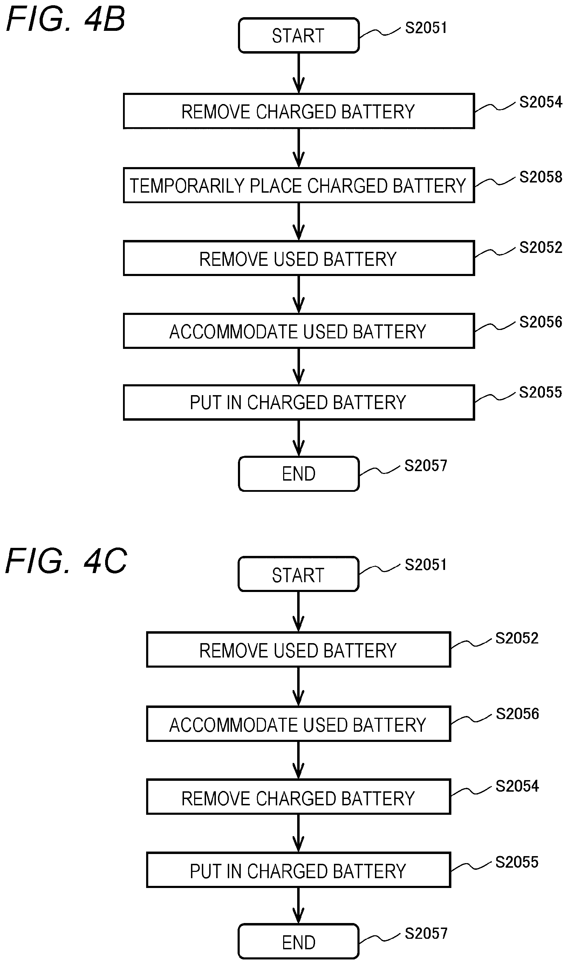

FIG. 4B is a flowchart illustrating another example of battery replacement step S205.

In the flowchart, when battery replacement start step S2051 is started, in charged battery removal step S2054, the work unit 1013 removes the accommodated detachable rechargeable battery 53b from the station power control unit 1022.

In charged battery temporary placement step S2058, the work unit 1013 transports the removed detachable rechargeable battery 53b to a temporary placing position to place and temporarily hold the detachable rechargeable battery 53b.

In used battery removal step S2052, the work unit 1013 removes the mounted detachable rechargeable battery 53a from the robot power control unit 1011.

In used battery accommodating step S2056, the work unit 1013 transports the removed detachable rechargeable battery 53a to the predetermined battery accommodating position of the station power control unit 1022, and accommodates the detachable rechargeable battery 53a in a chargeable posture. In charged battery put-in step S2055, the work unit 1013 transports the temporarily held detachable rechargeable battery 53b from the temporary placing position to the predetermined battery accommodating position of the robot power control unit 1011, and puts in the detachable rechargeable battery 53b in a posture capable of supplying power.

In battery replacement end step S2057, battery replacement step S205 is ended.

FIG. 4C is a flowchart illustrating still another example of battery replacement step S205.

This flowchart illustrates a case where the station 102 includes a plurality of slots (charging units) capable of charging detachable rechargeable batteries 53, and there is at least one empty slot among the slots at the start of battery replacement step S205.

In the flowchart, when battery replacement start step S2051 is started, in used battery removal step S2052, the work unit 1013 removes the mounted detachable rechargeable battery 53a from the robot power control unit 1011.

In used battery accommodating step S2056, the work unit 1013 transports the removed detachable rechargeable battery 53a to an empty slot of the station power control unit 1022, and accommodates the detachable rechargeable battery 53a in a chargeable posture.

In charged battery removal step S2054, the work unit 1013 removes the accommodated detachable rechargeable battery 53b from the station power control unit 1022.

In charged battery put-in step S2055, the work unit 1013 transports the removed detachable rechargeable battery 53b to the predetermined battery accommodating position of the robot power control unit 1011, and puts in the detachable rechargeable battery 53b in a posture capable of supplying power.

In battery replacement end step S2057, battery replacement step S205 is ended.

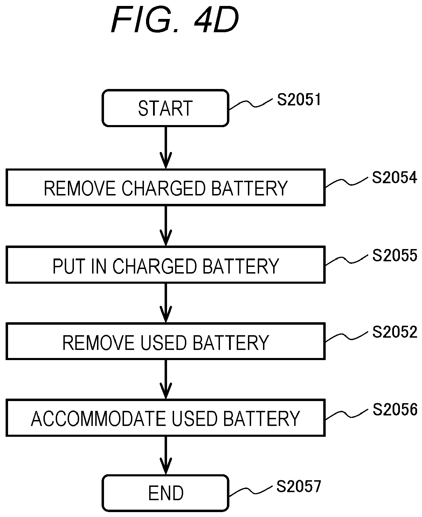

FIG. 4D is a flowchart illustrating still another example of battery replacement step S205.

This flowchart illustrates a case where the mobile robot 101 includes a plurality of slots capable of being supplied with power from the detachable rechargeable batteries 53, and there is at least one empty slot among the slots at the start of battery replacement step S205.

In the flowchart, when battery replacement start step S2051 is started, in charged battery removal step S2054, the work unit 1013 removes the accommodated detachable rechargeable battery 53b from the station power control unit 1022.

In charged battery put-in step S2055, the work unit 1013 transports the removed detachable rechargeable battery 53b to an empty slot of the robot power control unit 1011, and puts in the detachable rechargeable battery 53b in a posture capable of supplying power.

In used battery removal step S2052, the work unit 1013 removes the mounted detachable rechargeable battery 53a from the robot power control unit 1011.

In used battery accommodating step S2056, the work unit 1013 transports the removed detachable rechargeable battery 53a to the predetermined battery accommodating position of the station power control unit 1022, and accommodates the detachable rechargeable battery 53a in a chargeable posture.

In battery replacement end step S2057, battery replacement step S205 is ended.

Here, in a case where the detachable rechargeable batteries 53 have covers or the like, it is sufficient that, before removing the detachable rechargeable batteries 53 in used battery removal step S2052 and charged battery removal step S2054, the work unit 1013 opens each of the covers covering the detachable rechargeable batteries 53 to be removed to make the detachable rechargeable batteries 53 detachable. Furthermore, in battery replacement start step S2051, both the covers covering the detachable rechargeable battery 53a and the detachable rechargeable battery 53b may be opened.

Similarly, it is sufficient that, after housing the detachable rechargeable batteries 53 in used battery accommodating step S2056 and charged battery put-in step S2055, the work unit 1013 closes each of the covers covering the detachable rechargeable batteries 53 housed to cover the detachable rechargeable batteries 53. Furthermore, in battery replacement end step S2057, both the covers covering the detachable rechargeable battery 53a and the detachable rechargeable battery 53b may be closed.

According to the present embodiment, the station does not require an actively moving system or mechanism such as a motor. Therefore, it is possible to reduce the size and weight of the station. As a result, it is possible to improve the degree of freedom in arrangement of the station, reduce the occupied space, and reduce the maintenance frequency.

Furthermore, this makes it easy to increase the number of stations installed in the work space, and it is possible to increase the work space and reduce the size and weight of the robot by reducing the battery capacity, and it is possible to reduce the power consumption.

Furthermore, according to the present embodiment, the battery replacement work takes less time than directly charging the rechargeable battery housed in the mobile robot. Accordingly, it is possible to shorten the time during which the mobile robot pauses at the station, and secure the time during which the mobile robot actually works.

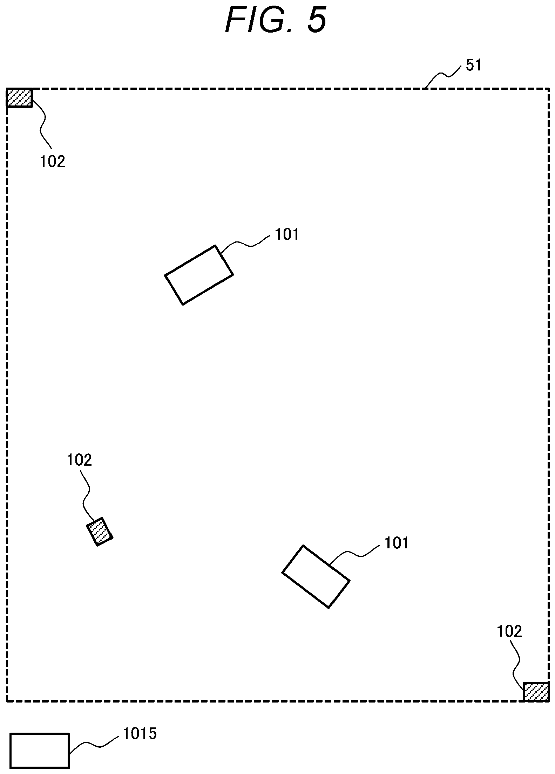

FIG. 5 is a schematic configuration diagram illustrating an example of the mobile robot system including a plurality of components.

In the drawing, the mobile robot system includes two mobile robots 101, three stations 102, and an external arrangement control unit 1015.

The two mobile robots 101 and the three stations 102 are disposed in a work space 51. On the other hand, the external arrangement control unit 1015 is disposed outside the work space 51. Here, one of the three stations 102 may be used as the main station, and other two stations may be used complementarily.

In the drawing, when determining that the mobile robot 101 needs replenishment of energy, the external arrangement control unit 1015 selects the station 102 where the battery replacement work is to be performed from the plurality of stations 102.

For example, in a case where the remaining power amount in the detachable rechargeable battery 53a is extremely small or the like, a nearest station 102 may be selected or the like. Furthermore, for example, in a case where the remaining power amount in the detachable rechargeable battery 53a is relatively large or the like, the station 102 having the detachable rechargeable battery 53b with the highest power may be selected or the like. Here, the remaining power amount refers to the amount of power remaining in the battery.

Furthermore, for example, in a case where the plurality of mobile robots 101 request energy replenishment or the like, it is sufficient that the external arrangement control unit 1015 instructs, or the like, each mobile robot 101 at which station 102 the battery replacement work is to be performed on the basis of the position of each mobile robot 101 that requests energy replenishment, the remaining power amount of the detachable rechargeable battery 53a, the position of each station 102, and the stored power amount of the detachable rechargeable battery 53b. Therefore, in some cases, even if the detachable rechargeable battery 53b is in a state of not completely charged, the detachable rechargeable battery 53b may be used for replacement with the detachable rechargeable battery 53a.

Note that, in the drawing, the external arrangement control unit 1015 is disposed outside the work space 51, but the present invention is not limited thereto. The external arrangement control unit 1015 may be disposed in the work space 51, and may be formed as a part of the control unit 1014 of the mobile robot 101.

Furthermore, the mobile robot system includes the two mobile robots 101 and the three stations 102, but the present invention is not limited thereto. The same applies even when the mobile robot system includes one or more mobile robots and a plurality of stations.

In summary, the mobile robot 101 is electrically connectable to a plurality of stations 102, the plurality of stations 102 each include another detachable rechargeable battery, the control unit 1014 determines the station 102 that the mobile robot 101 should approach from among the plurality of stations 102 on the bases of at least one of the remaining power amount and the position of the detachable rechargeable battery, and the stored power amount and the position of another detachable rechargeable battery of the plurality of stations 102.

### [Second embodiment]

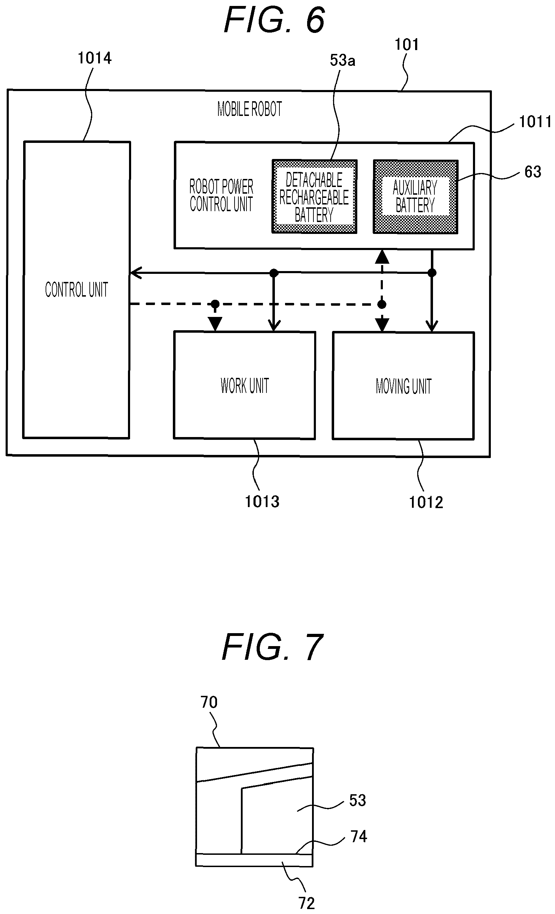

FIG. 6 is a schematic configuration diagram illustrating a mobile robot according to a second embodiment.

In the present embodiment, portions different from those in the first embodiment will be described.

As illustrated in the drawing, the robot power control unit 1011 includes an auxiliary battery 63 in addition to the detachable rechargeable battery 53a. The auxiliary battery 63 may be detachable, and may be one of a plurality of detachable rechargeable batteries 53.

Furthermore, the robot power control unit 1011 may be configured to charge the auxiliary battery 63 by using power of the detachable rechargeable battery 53b newly mounted by battery replacement work.

In a case of the present embodiment, in power switching A step S204 in FIG. 2, the power source of the mobile robot 101 is switched from the detachable rechargeable battery 53a to the auxiliary battery 63.

Then, in battery replacement step S205, the work unit 1013 performs battery replacement work of replacing detachable rechargeable battery 53a with the detachable rechargeable battery 53b on the basis of the control command from the control unit 1014.

In power switching B step S206, the source of power of the mobile robot 101 is switched from the auxiliary battery 63 to the detachable rechargeable battery 53b newly incorporated in the mobile robot 101.

In end step S207, the energy replenishment routine to the mobile robot 101 is ended.

As a result, the mobile robot 101 returns to the originally intended work. The station 102 starts charging the newly accommodated detachable rechargeable battery 53a.

According to the configuration of the present embodiment, the mobile robot 101 can move by using the power of the auxiliary battery 63. Furthermore, power switching A step S204 is performed before approaching step S202 or positioning step S203, or positioning step S203 may not be performed.

Furthermore, according to the configuration of the present embodiment, also in the battery replacement work in battery replacement step S205, the mobile robot 101 can be moved by driving the moving unit 1012 by using the power of the auxiliary battery 63. Therefore, not only the work unit 1013 but also the moving unit 1012 may be driven for each of the operations such as removing, transporting, temporarily placing, putting in, and accommodating each battery.

Note that also in steps illustrated in FIGS. 4A to 4D, the power of the auxiliary battery 63 can be appropriately used.

Next, desirable configurations of portions of the robot power control unit 1011 and the charging unit 1021 that accommodate the detachable rechargeable batteries will be described.

FIG. 7 is a top view illustrating an example of an accommodating portion that is a portion for accommodating a detachable rechargeable battery.

As illustrated in the drawing, an accommodating portion 70 has a taper and has an electrode 72. The detachable rechargeable battery 53 also has a taper and has a terminal surface 74. The contact between the electrode 72 and the terminal surface 74 enables electrical conduction. Then, the taper of the accommodating portion 70 and the taper of the detachable rechargeable battery 53 are arranged to face each other, so that the detachable rechargeable battery 53 inserted from the right side in the drawing stops at an appropriate position.

With such a configuration, it is possible to prevent a problem that the terminal surface 74 of the detachable rechargeable battery 53 does not come into contact with the electrode 72 from occurring.

Furthermore, in the first and second embodiments, a case has been described where the work unit 1013 is a manipulator including a robot arm and a robot hand. However, according to the configuration in which the tapers are provided, the rechargeable battery can be easily attached and detached even if the work unit is configured to move back and forth like a piston.

Note that, in the drawing, an example is illustrated in which a taper is provided on a side surface of the detachable rechargeable battery 53, but the embodiment is not limited thereto, and the taper may be provided on any surface.

### Reference Signs List

- 51: work space
- 53, 53a, 53b: detachable rechargeable battery
- 63: auxiliary battery
- 70: accommodating portion
- 72: electrode
- 74: terminal surface
- 100: mobile robot system
- 101: mobile robot
- 1011: robot power control unit
- 1012: moving unit
- 1013: work unit
- 1014: control unit
- 1015: external arrangement control unit
- 102: station
- 1021: charging unit
- 1022: station power control unit
- S201: start step
- S202: approaching step
- S203: robot positioning step
- S204: power switching A step
- S205: battery replacement step
- S2051: battery replacement start step
- S2052: used battery removal step
- S2053: used battery temporary placement step
- S2054: charged battery removal step
- S2055: charged battery put-in step
- S2056: used battery accommodating step
- S2057: battery replacement end step
- S2058: charged battery temporary placement step
- S206: power switching B step
- S207: end step

## Claims

1. A mobile robot comprising:
a robot power control unit;
a moving unit;
a work unit; and
a control unit, wherein
the moving unit has a function of moving the mobile robot,
the work unit has a function of performing predetermined work,
the control unit performs calculations for controlling at least operations of the moving unit and the work unit, and outputs a control command to each of the moving unit and the work unit,
the robot power control unit includes a housing portion for a detachable rechargeable battery,
the detachable rechargeable battery housed in the housing portion supplies power to the moving unit and the work unit, and
the predetermined work includes battery replacement work in which the detachable rechargeable battery housed in the housing portion is detached from the housing portion and another detachable rechargeable battery is attached from an outside to the housing portion.

2. The mobile robot according to claim 1, wherein the battery replacement work is performed in a case where a remaining power amount of the detachable rechargeable battery housed in the housing portion becomes a predetermined value or less.

3. The mobile robot according to claim 1, wherein the another detachable rechargeable battery has been charged.

4. The mobile robot according to claim 1, wherein the battery replacement work is performed by driving the work unit by using power supplied from a station to which the mobile robot is electrically connected.

5. The mobile robot according to claim 1, wherein
the robot power control unit includes an auxiliary battery, and
the battery replacement work is performed by driving the work unit by using power stored in the auxiliary battery.

6. The mobile robot according to claim 1, wherein the work unit includes a manipulator including a robot arm and a robot hand.

7. The mobile robot according to claim 1, wherein the work unit includes a piston used for the battery replacement work.

8. The mobile robot according to claim 1, wherein at least a part of the function of the control unit is provided outside the mobile robot.

9. The mobile robot according to claim 4, wherein a lock used when electrically connecting the mobile robot and the station is provided between the mobile robot and the station.

10. The mobile robot according to claim 5, wherein the auxiliary battery is one of the detachable rechargeable batteries housed in the housing portion.

11. The mobile robot according to claim 5, wherein the auxiliary battery is rechargeable by using power stored in the detachable rechargeable battery housed in the housing portion.

12. A mobile robot system comprising:
the mobile robot according to claim 1; and
a station to which the mobile robot is electrically connectable, wherein
the station includes a charging unit that houses the another detachable rechargeable battery.

13. The mobile robot system according to claim 12, wherein the battery replacement work is performed in a case where a remaining power amount of the detachable rechargeable battery housed in the housing portion becomes a predetermined value or less.

14. The mobile robot system according to claim 12, wherein the another detachable rechargeable battery has been charged.

15. The mobile robot system according to claim 12, wherein the battery replacement work is performed by driving the work unit by using power supplied from the station to which the mobile robot is electrically connected.

16. The mobile robot system according to claim 12, wherein
the robot power control unit includes an auxiliary battery, and
the battery replacement work is performed by driving the work unit by using power stored in the auxiliary battery.

17. The mobile robot system according to claim 12, wherein at least a part of the function of the control unit is provided outside the mobile robot.

18. The mobile robot system according to claim 12, wherein a lock used when electrically connecting the mobile robot and the station is provided between the mobile robot and the station.

19. The mobile robot system according to claim 16, wherein the auxiliary battery is one of the detachable rechargeable batteries housed in the housing portion.

20. The mobile robot system according to claim 16, wherein the auxiliary battery is rechargeable by using power stored in the detachable rechargeable battery housed in the housing portion.

21. The mobile robot system according to claim 12, further comprising another station in addition to the station.

22. A method for replacing a rechargeable battery of a mobile robot including
a robot power control unit,
a moving unit,
a work unit, and
a control unit, wherein
the moving unit has a function of moving the mobile robot,
the work unit has a function of performing predetermined work,
the control unit performs calculations for controlling at least operations of the moving unit and the work unit, and outputs a control command to each of the moving unit and the work unit,
the robot power control unit includes a housing portion for a detachable rechargeable battery, and
the detachable rechargeable battery housed in the housing portion supplies power to the moving unit and the work unit,
the method comprising
a battery replacement step in which the work unit detaches the detachable rechargeable battery housed in the housing portion from the housing portion and attaches another detachable rechargeable battery from an outside to the housing portion, as the predetermined work.

23. The method for replacing a rechargeable battery of a mobile robot according to claim 22, wherein
the mobile robot is electrically connectable to a plurality of stations,
each of the plurality of stations includes the another detachable rechargeable battery, and
the control unit determines a station that the mobile robot is to approach among the plurality of stations on a basis of at least one of a remaining power amount and a position of the detachable rechargeable battery, and a stored power amount and a position of the another detachable rechargeable battery of each of the plurality of stations.
